# EUROPEAN PATENT APPLICATION

(11) **EP 2 323 205 A1**
(43) Date of publication of application: **18.05.2011**
(21) Application number: 09812827.5
(22) Date of filing: 21.07.2009
(51) Int. Cl.: H01M 6/06, H01M 4/06, H01M 4/42

(54) **MERCURY-FREE ALKALINE DRY BATTERY**

(30) Priority: 12.09.2008 JP 2008235311
(71) Applicant: Panasonic Corporation, Kadoma-shi Osaka 571-8501 (JP)
(72) Inventor: SHIMAMURA, Harunari, Osaka 540-6207 (JP); NUNOME, Jun, Osaka 540-6207 (JP); KATO, Fumio, Osaka 540-6207 (JP)
(74) Representative: Grünecker, Kinkeldey, Stockmair & Schwanhäusser Anwaltssozietät
(86) International application number: PCT/JP2009/003405
(87) International publication number: WO 2010/029678

(57) **Abstract**

The present invention provides a mercury-free alkaline dry battery in which a utilization ratio of zinc as a negative electrode active material is increased to improve a discharge characteristic, the mercury-free alkaline dry battery including: a positive electrode; a negative electrode; and a separator, wherein almond-shaped zinc particles 21 are contained as a negative electrode active material. Each of the almond-shaped zinc particles 21 has a length of 1 mm to 50 mm in a long axis direction, both inclusive, and one of ends of the almond-shaped zinc particle in the long axis direction constitutes an acute end.

## Description

### TECHNICAL FIELD

The present invention relates to mercury-free dry batteries.

### BACKGROUND ART

Alkali-manganese dry batteries including manganese dioxide as a positive electrode, zinc as a negative electrode, and an alkaline solution as an electrolyte have widely been used as power sources of various devices for their versatility and inexpensiveness.

In an alkaline dry battery, zinc powder of indefinite shape obtained by gas atomization etc. is used as a negative electrode active material. According to the conventional technology, mercury is added to the negative electrode to form amalgam on the surfaces of zinc powder particles, thereby ensuring contact among the zinc powder particles, and contact between the zinc powder particles and a current collector, and increasing efficiency of current collection. However, in view of environmental friendliness, mercury-free alkaline dry batteries replaced the mercury-containing alkaline dry batteries in the 1980-1990's. This reduced resistance to corrosion, and a discharge characteristic of the alkaline dry batteries.

The problem of the resistance to corrosion has been addressed by, for example, a technology of using highly corrosion-resistant zinc alloy powder containing a small amount of indium, aluminum, bismuth, etc., as taught by Patent Document 1.

To improve the discharge characteristic, as taught by Patent Document 2, a proper amount of zinc flakes is mixed with the zinc powder to ensure contact among the zinc powder particles, and contact between the zinc powder particles and the current collector. As an electrolyte, a gelled electrolyte is used to prevent precipitation of the zinc powder particles, and separation of the zinc powder particles from the electrolyte in the absence of mercury. However, an aggregate of the zinc powder particles which does not sufficiently contact with the adjacent zinc powder particles and the current collector in the gelled electrolyte does not react sufficiently, and is not utilized as the negative electrode active material. The technology described in Patent Document 2 is directed to prevent this phenomenon.

### CITATION LIST

### PATENT DOCUMENTS

[Patent Document 1] Japanese Published Examined Application No. H03-71737

[Patent Document 2] Japanese Translation of PCT International Application No. 2000-503467

### SUMMARY OF THE INVENTION

### TECHNICAL PROBLEM

Patent Document 2 merely describes rectangular zinc flakes of 0.61 × 0.61 × 0.025 mm as an example. The zinc flakes of such shape and thickness are easily curled and agglomerated, and the contact among the zinc powder particles, and the contact between the zinc powder particles and the current collector cannot be sufficiently ensured. Further, since the zinc flakes described in Patent Document 2 are rectangular, their rectangular surfaces may inhibit diffusion of the electrolyte, thereby reducing the discharge characteristic.

### SOLUTION TO THE PROBLEM

In view of the foregoing, the present invention has been achieved. An object of the present invention is to provide a mercury-free alkaline dry battery which is increased in utilization ratio of zinc as a negative electrode active material, thereby improving the discharge characteristic.

In order to achieve the object, a mercury-free alkaline dry battery of the present invention includes: a positive electrode; a negative electrode; and a separator, wherein the negative electrode contains almond-shaped zinc particles as a negative electrode active material, and each of the almond-shaped zinc particles has a length in a long axis direction of 0.5 mm to 50 mm, both inclusive, and one of ends of the almond-shaped zinc particle in the long axis direction constitutes an acute end. The term "particles" indicates small grains. The term "one of ends of the almond-shaped zinc particle in the long axis direction constitutes an acute end" indicates that when the almond-shaped zinc particle is cut at a surface including the long axis thereof, one of the ends of the almond-shaped zinc particle in the long axis direction forms an acute angle in the surface. The almond-shaped zinc particle in the negative electrode may present in the almond shape, may be bent, or may be present in the helical shape.

In a certain embodiment, the almond-shaped zinc particle has a specific surface area of 160 cm²/g to 1500 cm²/g, both inclusive.

In a certain embodiment, the almond-shaped zinc particle has a grain size of 1 µm to 50 µm, both inclusive.

In a certain embodiment, a relation of 0.1 ≤ minor radius/major radius ≤ 1 is established on a cross section of the almond-shaped zinc particle perpendicular to the long axis.

In a certain embodiment, the negative electrode contains a gelled alkaline electrolyte as a dispersion medium.

In a certain embodiment, the negative electrode further contains fine zinc particles having a maximum diameter of 500 µm or smaller as the negative electrode active material, and the content of the almond-shaped zinc particles is 2% by mass to 80% by mass, both inclusive, relative to the total negative electrode active material. The fine zinc particles are smaller than the above-described particles, and preferably have a maximum diameter which is one or more order of magnitude smaller than a maximum diameter of the particles. Preferably, a relation of 3/20 ≤ minor radius/major radius ≤ 1 is established on a cross section of the almond-shaped zinc particle perpendicular to the long axis, and the maximum diameter of the fine zinc particles is 250 µm or smaller.

In a certain embodiment, the negative electrode has a density of 2.3 g/cm³ to 3.8 g/cm³, both inclusive.

In a certain embodiment, at least one substance selected from the group consisting of Al, Bi, In, Ca, and Mg is added to the almond-shaped zinc particles.

In a certain embodiment, at least one substance selected from the group consisting of Al, Bi, In, Ca, and Mg is added to the almond-shaped zinc particles and the fine zinc particles.

### ADVANTAGES OF THE INVENTION

In the mercury-free alkaline dry battery of the present invention, the almond-shaped zinc particles in each of which one of ends in the long axis direction constitutes the acute end are used as the negative electrode active material. Therefore, the zinc particles as the negative electrode active material can electrically be connected with reliability, and an electrolyte is easily diffused. This increases a utilization ratio of the negative electrode, and improves a discharge characteristic.

### BRIEF DESCRIPTION OF THE DRAWINGS

[FIG. 1] FIG. 1 schematically shows an almond-shaped zinc particle.
[FIG. 2] FIG. 2(a) shows a roll used in a melt spinning method, and FIG. 2(b) is an enlarged view of a groove formed in the roll.
[FIG. 3] FIG. 3 shows a table indicating properties of manufactured zinc granules.
[FIG. 4] FIG. 4 shows a table indicating the results of evaluation of Example 1, and Comparative Examples 1-3.
[FIG. 5] FIG. 5 shows a table indicating the results of evaluation of Examples 2-8.
[FIG. 6] FIG. 6 shows a table indicating the results of evaluation of Examples 9-16.
[FIG. 7] FIG. 7 shows a table indicating the results of evaluation of Examples 17-25.
[FIG. 8] FIG. 8 shows a table indicating the results of evaluation of Examples 26-41.
[FIG. 9] FIG. 9 shows a table indicating the results of evaluation of Examples 42-49.
[FIG. 10] FIG. 10 shows a table indicating the results of evaluation of Examples 50-58.
[FIG. 11] FIG. 11 shows an alkaline dry battery of an embodiment, partially broken.

### DESCRIPTION OF EMBODIMENTS

Zinc granules used for a negative electrode of a mercury-free alkaline dry battery will be described. The zinc granules are small bits or pieces of zinc of any shape which have a maximum diameter of about several µm to 10 mm, and are used as a negative electrode active material. The zinc granules include the zinc particles, and the zinc fine particles described above. In this specification, zinc includes a zinc alloy containing a small amount of metal except for zinc (except for mercury).

The zinc granules filled in a commercially available conventional alkaline dry battery are a powdery material manufactured by gas atomization. The zinc granules have an indefinite shape like a potato, and are classified by a mesh to have an average particle diameter of around 180 µm. For example, zinc powder manufactured by MITSUI MINING & SMELTING CO., LTD. (lot No. 70SA-H, containing Al 50 ppm, Bi 50 ppm, and In 200 ppm) may be used.

In the following embodiment, almond-shaped zinc particles are manufactured by a melt spinning method. The melt spinning method is a method for spraying/dropping molten metal on a rotating single roll, and blowing the molten metal by centrifugal force to form granules of metal. Metals of various shapes including strip-shaped metal, powders, etc., can be formed by adjusting the spraying amount of the molten metal, or the number of revolutions of the roll. The method for forming the zinc particles of the present application is not limited to the melt spinning method.

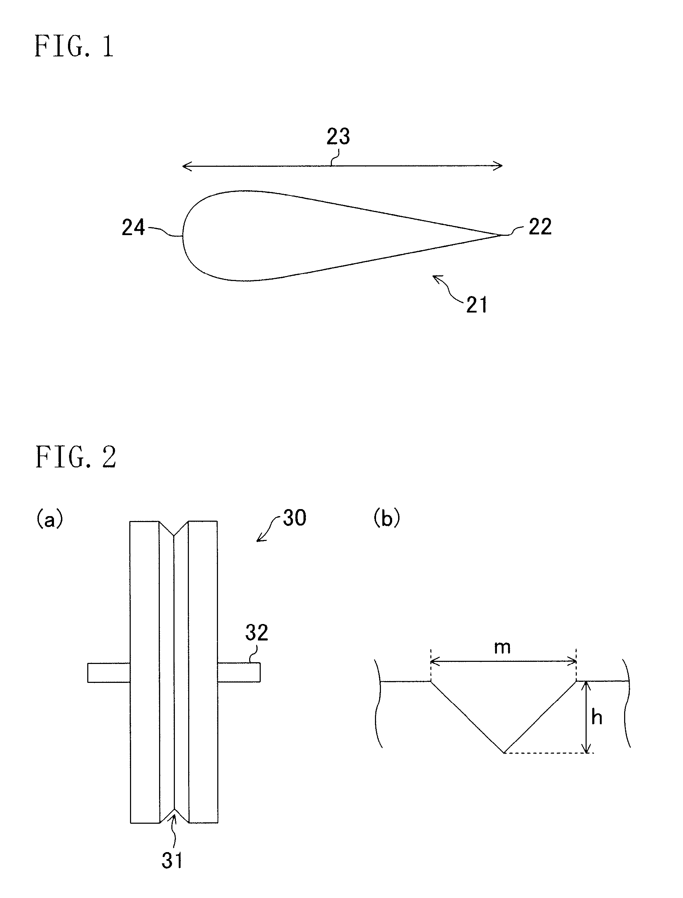

FIG. 1 shows the shape of the almond-shaped zinc particle. One of ends of the almond-shaped zinc particle 21 in the long axis direction 23 constitutes an acute end 22. The other end constitutes an obtuse end 24. A surface of the zinc particle may be smooth, or rough. The almond-shaped zinc particle 21 can be manufactured by using a general cylindrical or disc-shaped roll, but can also be manufactured by using a roll 30 shown in FIG. 2. In this case, a groove 31 is formed in a circumferential surface which is the farthest from a rotation shaft 32, and the molten metal is sprayed to the groove 31, thereby forming the almond-shaped zinc particle 21 having a large value of minor radius/major radius of a cross section of the almond-shaped zinc particle perpendicular to the long axis direction 23. The value of minor radius/major radius depends on a width m and a depth h of the groove 31. The cross sectional shape of the groove 31 is not limited to the triangular shape, and may be rectangular, or U-shaped.

### (Embodiment)

### -Manufacture of Zinc Granules-

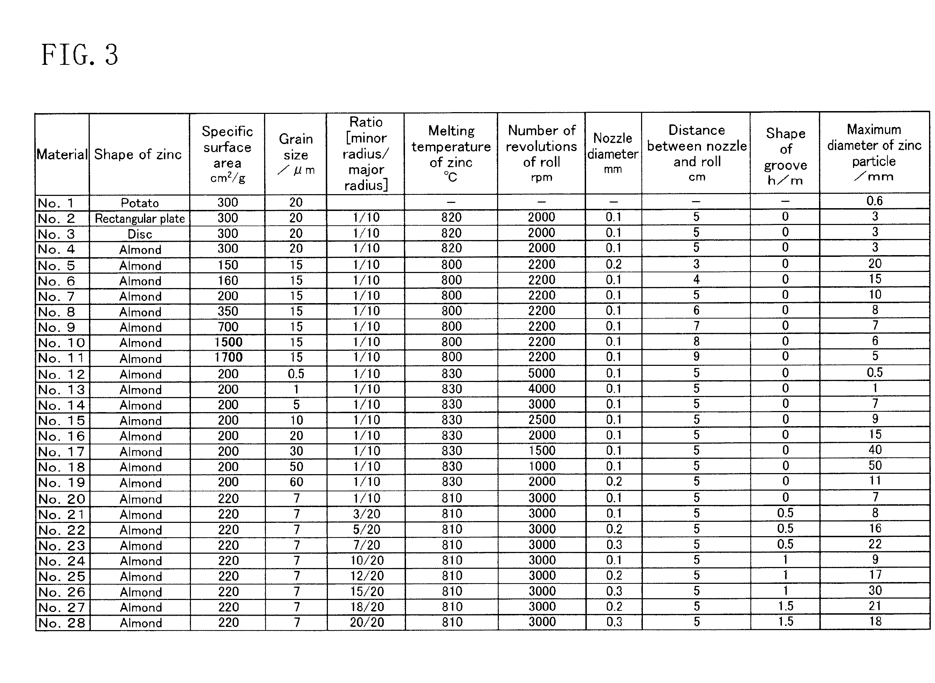

To manufacture alkaline dry batteries, zinc granules of various shapes were manufactured by the melt spinning method using the zinc powder manufactured by MITSUI MINING & SMELTING CO., LTD. FIG. 3 shows a table indicating manufacturing conditions, shape, and properties of the obtained zinc granules. A nozzle was used to spray the heated zinc powder to the roll. When the groove shape h/m was zero, a flat roll having no groove was used. The obtained zinc granules did not have a uniform shape even when they were manufactured under the same manufacturing condition. Therefore, the table indicates an average shape of the zinc granules of the largest number obtained under the corresponding manufacturing condition. Likewise, the maximum diameter of the zinc granules is also an average value. Th e almond-shaped zinc particles of Nos. 4-28 have the maximum diameter in the range of 0.5 mm to 50 mm, both inclusive. Zinc granules which are potato-shaped (No. 1) were raw zinc powder particles. Zinc granules which are rectangular (No. 2) are formed by cutting both ends of the almond-shaped zinc particles.

### -Measurement of Specific Surface Area-

A specific surface area of the zinc granules was measured by a gas adsorption method. A measurement apparatus ASAP-2010 manufactured by Shimadzu Corporation was used. About 7 g of the zinc granules was placed in a measurement cell, and vacuum degassing was performed at 120°C for 2 hours. Then, a gas adsorption amount was measured by using Kr as an adsorption gas, and the gas adsorption amount was converted to the specific surface area.

### -Measurement of Grain Size-

A grain size of the zinc granules was measured on a microscope photograph. Specifically, an enlarged photograph of a surface or a cross section of the obtained zinc granule was taken using a light microscope or an electron microscope, and the grain size was measured on the photograph. Magnification of the microscope was adjusted in such a manner that a single photograph showed several tens of regions surrounded by grain boundaries. Two or more lines were arbitrarily drawn on the microscope photograph, and one of the lines which includes points of intersection with ten or more grain boundaries was selected. Then, a distance from a point of intersection of the line and the first grain boundary among the ten continuous grain boundaries, to a point of intersection of the line and the tenth grain boundary was measured, and the measured value was divided by 9 to obtain value r. Additional two lines were selected, and the values r were obtained in the same manner to obtain an average value of the three values r as a grain size of the zinc granule.

### -Description of Alkaline Dry Battery-

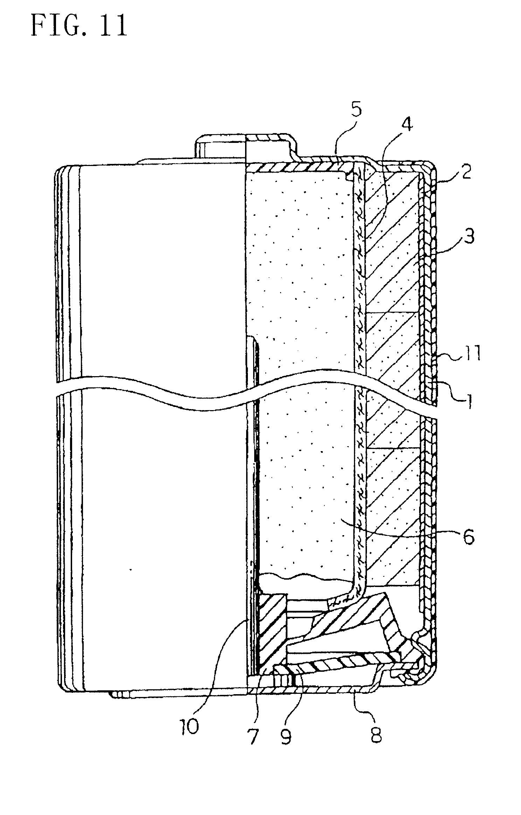

A mercury-free alkaline dry battery, which is an embodiment of the present invention, will be described below. As shown in FIG. 11, the mercury-free alkaline dry battery includes a positive electrode material mixture pellet 3, and a gelled negative electrode 6. The positive electrode material mixture pellet 3 and the gelled negative electrode 6 are isolated from each other by a separator 4. A positive electrode case 1 is made of a nickel-plated steel sheet. A graphite-coated film 2 is formed inside the positive electrode case 1.

The mercury-free alkaline dry battery shown in FIG. 11 can be manufactured in the following manner. Specifically, a plurality of positive electrode material mixture pellets 3, each of which contains a positive electrode active material such as manganese dioxide etc., and is in the shape of a hollow cylinder, are inserted in the positive electrode case 1, and are pressed to bring the positive electrode material mixture pellets into close contact with an inner surface of the positive electrode case 1.

The separator 4 wound in the shape of a cylinder, and an insulating cap 5 are inserted inside the positive electrode material mixture pellets 3, and then an electrolyte is injected to wet the separator 4 and the positive electrode material mixture pellets 3.

After the injection, the gelled negative electrode 6 is filled inside the separator 4. The gelled negative electrode 6 is manufactured in advance by mixing and dispersing zinc granules as a negative electrode active material in a gelled alkaline electrolyte (a dispersion medium). The zinc granules are manufactured as described above. An anionic surfactant, and a quaternary ammonium salt cationic surfactant are added to the alkaline electrolyte of the gelled negative electrode, and an indium compound is added as needed.

Then, a negative electrode current collector 10 integrated with a resin sealing plate 7, a bottom plate 8 which also functions as a negative electrode terminal, and an insulating washer 9 is inserted in the gelled negative electrode 6. Then, an opening end of the positive electrode case 1 is clamped onto an edge of the bottom plate 8 with an end of the sealing plate 7 interposed therebetween to bring the opening of the positive electrode case 1 into close contact with the bottom plate 8.

Then, an outer label 11 is applied to an outer surface of the positive electrode case 1. Thus, a mercury-free alkaline dry battery of the present embodiment is obtained.

### -Evaluation of Zinc Granules-

In the following examples, the zinc granules as the negative electrode active materials in the mercury-free alkaline dry batteries manufactured as described above were inspected. The following examples are set forth for the purposes of preferred examples in nature, and the present invention is not limited to these examples.

### <Example 1, Comparative Examples 1-3>

A gelled negative electrode 6 was manufactured in the following manner.

Almond-shaped zinc particles of No. 4 shown in FIG. 3 were used as the negative electrode active material of Example 1. Potato-shaped zinc granules of No. 1 were used as the negative electrode active material of Comparative Example 1. Rectangular plate-shaped zinc granules of No. 2 were used as the negative electrode active material of Comparative Example 2. Disc-shaped zinc granules of No. 3 were used as the negative electrode active material of Comparative Example 3. In the following examples and comparative examples, all the zinc granules and zinc particles contained 0.005 weight percent (wt. %) of Al, 0.005 wt. % of Bi, and 0.020 wt. % of In.

To 100 parts by weight (pbw) of the zinc particles or the zinc granules, 54 pbw of a 33 wt. % aqueous potassium hydroxide solution (containing 2 wt. % of ZnO), 0.7 pbw of crosslinked polyacrylic acid, and 1.4 pbw of crosslinked sodium polyacrylate were mixed as a gelled alkaline electrolyte and a dispersion medium, and 0.03 pbw of indium hydroxide (0.0197 pbw as metal indium) was added and mixed to form a mercury-free negative electrode.

Then, an AA mercury-free alkaline dry battery was manufactured.

A positive electrode was manufactured in the following manner. Electrolytic manganese dioxide and graphite were mixed in a weight ratio of 94:6, and 1 pbw of an electrolyte (a 39 wt. % aqueous potassium hydroxide solution containing 2 wt. % of ZnO) was mixed with 100 pbw of the obtained powder mixture. Then, the mixture was uniformly stirred and mixed by a mixer, and was granulated into particles of a certain size. The obtained particles were press-molded into a positive electrode material mixture pellet using a hollow cylindrical mold. The electrolytic manganese dioxide used was HH-TF manufactured by Tosoh Corporation, and the graphite used as SP-20 manufactured by Nippon Graphite Industries, ltd.

The positive electrode material mixture pellet obtained as described above was inserted in a positive electrode case to cover an inner wall surface of the positive electrode case, and a separator and a bottom plate were inserted. Vinylon-lyocell composite nonwoven fabric manufactured by Kuraray Co., Ltd. was used as the separator. Then, a 33 wt. % aqueous potassium hydroxide solution (containing 2 wt. % of ZnO) was injected inside the separator, the above-described negative electrode was filled, and the bottom plate was clamped. Thus, an AA alkaline dry battery was manufactured.

The dry batteries manufactured in this manner were evaluated under the following two discharge conditions.

Discharge condition (A): the batteries were discharged at a constant current of 100 mA, and a discharge capacity until a discharge voltage reached 0.9 V was evaluated. Temperature was 20°C. A so-called low rate discharge characteristic was determined under this condition.

Discharge condition (B): the batteries were discharged at a constant current of 1000 mA, and a discharge capacity until a discharge voltage reached 0.9 V was evaluated. Temperature was 20°C. A so-called high rate discharge characteristic was determined under this condition.

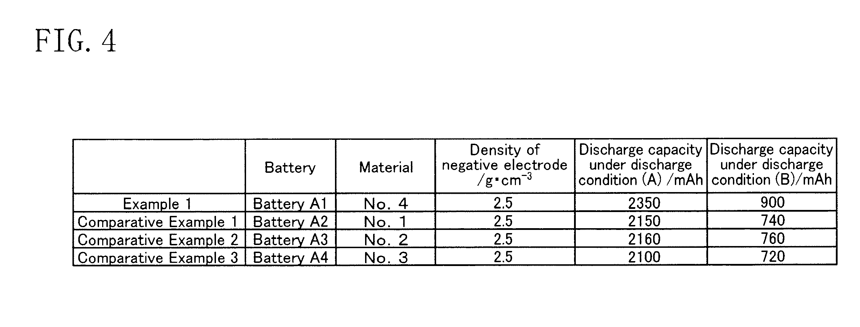

FIG. 4 shows the results of evaluation of Dry batteries A1-A4 of Example 1 and Comparative Examples 1-3. As compared with the dry batteries of Comparative Examples using the potato-shaped, rectangular plate-shaped, and disc-shaped zinc granules, the dry battery of Example 1 using the almond-shaped zinc granules showed high discharge capacities under both of the discharge conditions (A), (B), i.e., the dry battery of Example 1 showed a good discharge characteristic. It is presumed that the results were derived from electron conductivity among the zinc granules, and ease of diffusion of the electrolyte. Specifically, when the zinc granules are almond-shaped having one of ends in the long axis direction constituting an acute end, and the other end constituting an obtuse end, these ends stick in the adjacent zinc granules (particles) and aggregates of the zinc granules, thereby reliably contacting the zinc granules and the aggregates. Thus, an electron conductive network is provided densely by the zinc granules, and as a result, isolated zinc granules which are not electrically connected to the other zinc granules hardly exist. The electrolyte is easily diffused at and around the ends of the almond-shaped zinc granules where flow resistance is low. When the electron conductive network is provided densely by the zinc granules, reaction proceeds uniformly over time in every part of the aggregates of the zinc granules. Therefore, there are almost no zinc granules which are left unreacted, thereby increasing the discharge capacity. When the diffusion of the electrolyte is inhibited, a discharge voltage is reduced even if unreacted active material exists, and the discharge capacity is reduced. However, with use of the almond-shaped zinc particles as the negative electrode active material, such a disadvantage can be avoided from occurring. At least one of the ends of the almond-shaped zinc particle in the long axis direction constitutes an acute end, and the other end may be an acute or obtuse end. When both of the ends are acute ends, the discharge characteristic is more significantly improved. However, the discharge characteristic is sufficiently improved when only one of the ends constitutes the acute end.

In the dry battery of Comparative Example 1, it was difficult to keep the zinc granules into contact with each other in every part of the aggregates of the zinc granules. Therefore, the electron conductivity among the zinc granules was low, many zinc granules were left isolated, and reaction of the isolated zinc granules were delayed. In the dry battery of Comparative Example 2, the electron conductive network was denser than that of Comparative Example 1. However, since the zinc granules did not have the acute ends, the zinc granules did not effectively stick in the adjacent zinc granules (particles) and the aggregates of the zinc granules. Thus, the electron conductive network was not as dense as that of Example 1. Further, since the zinc granules are rectangular plate-shaped, the electrolyte was not diffused easily as compared with the case where the almond-shaped zinc granules were used. In the dry battery of Comparative Example 3, the electron conductivity among the zinc granules was low like the dry battery of Comparative Example 1, and the diffusion of the electrolyte was inhibited like the dry battery of Comparative Example 2. Further, the plate-shaped (flake-shaped) zinc granules of Comparative Examples 2 and 3 were curled into the shape similar to the potato-shaped zinc granules, and the electron conductive network became less dense. In contrast, the almond-shaped zinc granules were less likely to curl, and the electron conductive network remained dense.

### <Examples 2-8>

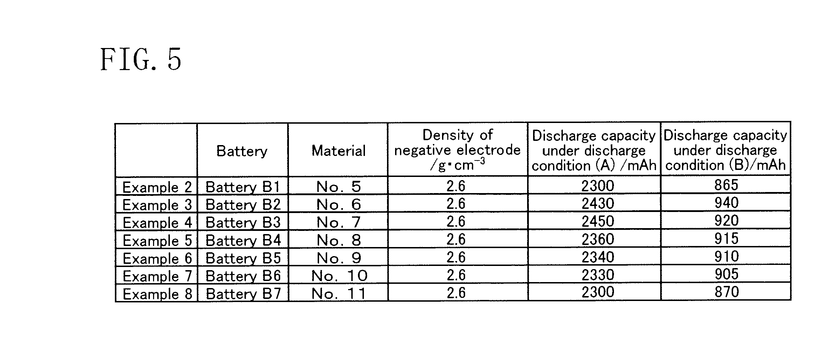

Dry batteries B1-B7 of Examples 2-8 shown in FIG. 5 were manufactured in the same manner as Example 1 except that almond-shaped zinc particles of Nos. 5-11 shown in FIG. 3 were used as the negative electrode active materials. FIG. 5 shows the results of evaluation of the dry batteries under the discharge conditions (A), (B).

In the dry battery of Example 2, a specific surface area of the almond-shaped zinc particles was 150 cm²/g, which was slightly small, and contact points among the zinc particles were reduced. Accordingly, the degree of improvement in discharge characteristic was not very high as compared with the dry batteries of Comparative Example 1-3. In the dry battery of Example 8, a specific surface area of the almond-shaped zinc particles was 1700 cm²/g, which was slightly large, and the electrolyte was easily held on the surfaces of the zinc particles, thereby reducing the ease of diffusion of the electrolyte. Accordingly, the degree of improvement in discharge characteristic was not very high as compared with the dry batteries of Comparative Examples 1-3. Therefore, the specific surface area of the almond-shaped zinc particles is preferably 160 cm²/g to 1500 cm²/g, both inclusive. The improvement in discharge characteristic of the dry batteries of Examples 2 and 8 were practically sufficient as compared with the dry batteries of Comparative Examples.

### <Examples 9-16>

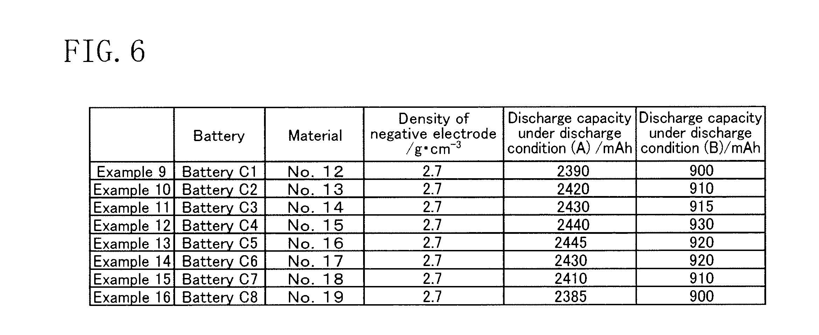

Dry batteries C1-C8 of Examples 9-16 shown in FIG. 6 were manufactured in the same manner as Example 1 except that almond-shaped zinc particles of Nos. 12-19 shown in FIG. 3 were used as the negative electrode active materials. FIG. 6 shows the results of evaluation of the dry batteries under the discharge conditions (A), (B).

In the dry battery of Example 9, a grain size of the almond-shaped zinc particles was 0.5 µm, which was slightly small, and the amount of gas generated from the grain boundaries was increased. Accordingly, the degree of improvement in discharge characteristic was not very high as compared with the dry batteries of Comparative Examples 1-3. In the dry battery of Example 16, the grain size of the almond-shaped zinc particle was 60 µm, which was slightly large, and reactivity of zinc was slightly reduced. Accordingly, the degree of improvement in discharge characteristic was not very high as compared with the dry batteries of Comparative Examples 1-3. Therefore, the grain size of the almond-shaped zinc particle is preferably 1 µm to 50 µm, both inclusive. The improvement in discharge characteristic of the dry batteries of Examples 9 and 16 was practically sufficient as compared with the dry batteries of Comparative Examples.

### <Examples 17-25>

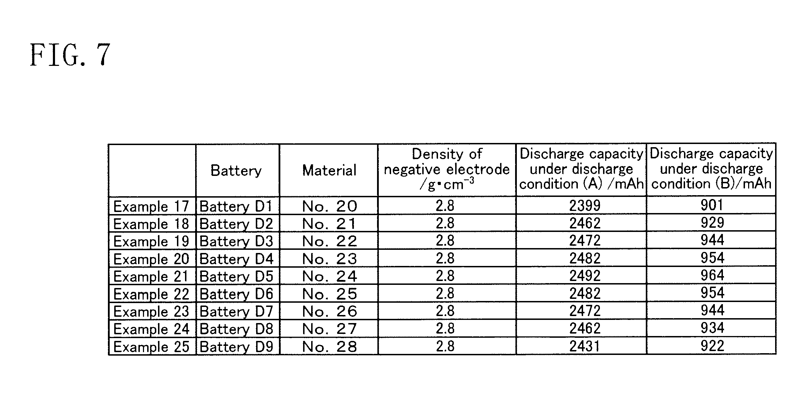

Dry batteries D1-D9 of Examples 17-25 shown in FIG. 7 were manufactured in the same manner as Example 1 except that almond-shaped zinc particles of Nos. 20-28 shown in FIG. 3 were used as the negative electrode active materials. FIG. 7 shows the results of evaluation of the dry batteries under the discharge conditions (A), (B).

In the dry batteries of Examples 17-25, a value of minor radius/major radius of a cross section of the almond-shaped zinc particle perpendicular to the long axis direction was sequentially varied from 0.1 to 1. The most preferable discharge characteristic was obtained when the value of minor radius/major radius was 0.5. Specifically, when the value of minor radius/major radius of the cross section is 0.1 to 1, both inclusive, the zinc particle is less likely to be deformed or curled, and a path of the diffusion of the electrolyte is easily ensured, thereby obtaining a good discharge characteristic. The value of minor radius/major radius of the cross section is more preferably 0.15 to 1, both inclusive, because a better discharge characteristic is obtained.

### <Examples 26-41>

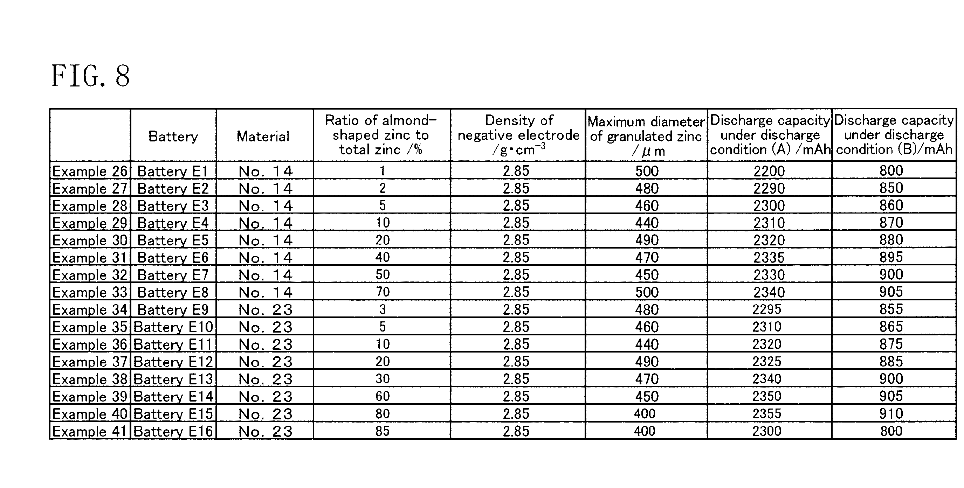

Dry batteries E1-E16 of Examples 26-41 shown in FIG. 8 were manufactured in the same manner as Example 1 except that almond-shaped zinc particles of No. 14 or No. 23 shown in FIG. 3 were used as the negative electrode active materials, and that the potato-shaped zinc granules (granulated zinc) of No. 1 was added as the negative electrode active material. The amount of the almond-shaped zinc particles was varied relative to the total amount of the negative electrode active material (zinc) as shown in FIG. 8. FIG. 8 shows the results of evaluation of the dry batteries under the discharge conditions (A), (B).

The dry batteries of Examples 26-33 included the almond-shaped zinc particles of No. 14 shown in FIG. 3, and the mixing ratio of the almond-shaped zinc particles relative to the total negative electrode active material was 1 % by mass (Dry battery E1) to 70 % by mass (Dry battery E8). The dry batteries of Examples 34-41 included the almond-shaped zinc particles of No. 23 shown in FIG. 3, and the mixing ratio of the almond-shaped zinc particles relative to the total negative electrode active material was 3 % by mass (Dry battery E9) to 85 % by mass (Dry battery E16).

Dry battery E1 in which the mixing ratio of the almond-shaped zinc particles was 1% by mass showed a good high rate discharge characteristic and a good low rate discharge characteristic as compared with the dry batteries of Comparative Examples 1-3. However, both of the discharge characteristics of Dry battery E1 were slightly low as compared with the discharge characteristics of Dry batteries E2-E8. Dry battery E16 in which the mixing ratio of the almond-shaped zinc particles was 85% by mass showed a good high rate discharge characteristic and a good low rate discharge characteristic as compared with the dry batteries of Comparative Examples 1-3. However, the high rate discharge characteristic of Dry battery E16 was slightly low as compared with the high rate discharge characteristic of Dry batteries E9-E15. The results indicate that the amount of the almond-shaped zinc particles which connect the negative electrode active materials was too small when the content of the almond-shaped zinc particles relative to the total negative electrode material was lower than 2% by mass, and a sufficient electron conductive network was not provided. As a result, the discharge characteristic was not significantly improved. Further, when the content of the almond-shaped zinc particles relative to the total negative electrode material was higher than 80% by mass, the diffusion of the electrolyte was not significantly improved, and the high rate discharge characteristic was not greatly improved. Therefore, the mixing ratio of the almond-shaped zinc particles relative to the total negative electrode active material is preferably 2% by mass to 80% by mass, both inclusive.

### <Examples 42-49>

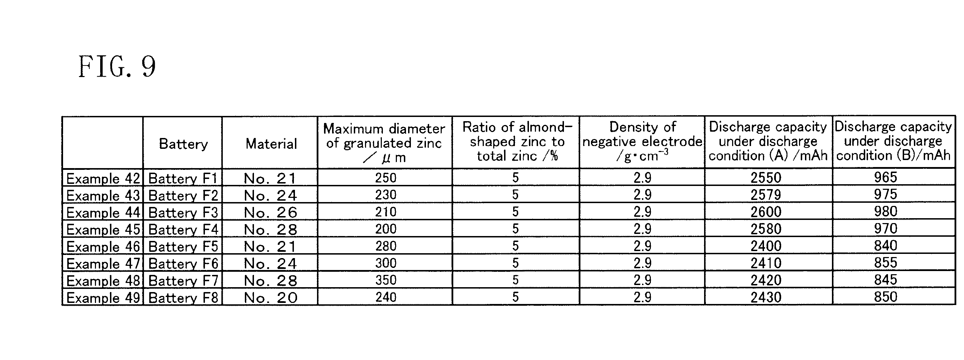

As shown in FIG. 9, Dry batteries F1-F8 of Examples 42-49 were manufactured in the same manner as Example 1 except that the almond-shaped zinc particles of Nos. 20, 21, 24, 26, and 28 shown in FIG. 3 were used as the negative electrode active materials, and the potato-shaped zinc granules of No. 1 (granulated zinc) were added as the negative electrode active material. The content of the almond-shaped zinc particles relative to the total negative electrode active material (zinc) was 5% by mass. Dry batteries F-1-F4, and F8 had a size (a maximum diameter) of the granulated zinc of 0.25 mm or smaller, and Dry batteries F5-F7 had a size of the granulated zinc larger than 0.25 mm. FIG. 9 shows the results of evaluation of the dry batteries under the discharge conditions (A), (B).

In comparison between Dry batteries F1 and F5, Dry batteries F2 and F6, and Dry batteries F3 and F7, the discharge characteristic was improved, but the degree of improvement was low as compared with Comparative Examples 1-3 when the maximum diameter of the granulated zinc was larger than 0.25 mm. It is presumed that when the maximum diameter of the granulated zinc is larger than 0.25 mm, the action of forming the electron conductive network densely, and the action of diffusing the electrolyte are not sufficient. Therefore, the maximum diameter of the granulated zinc to be mixed is preferably 0.25 mm or smaller. In comparison between Dry batteries F1-F4 and F8, the discharge characteristic was significantly improved when the value of minor radius/major radius of the cross section of the almond-shaped zinc particle was 0.15 or higher as compared with the case where the value of minor radius/major radius was 0.1.

### <Examples 50-58>

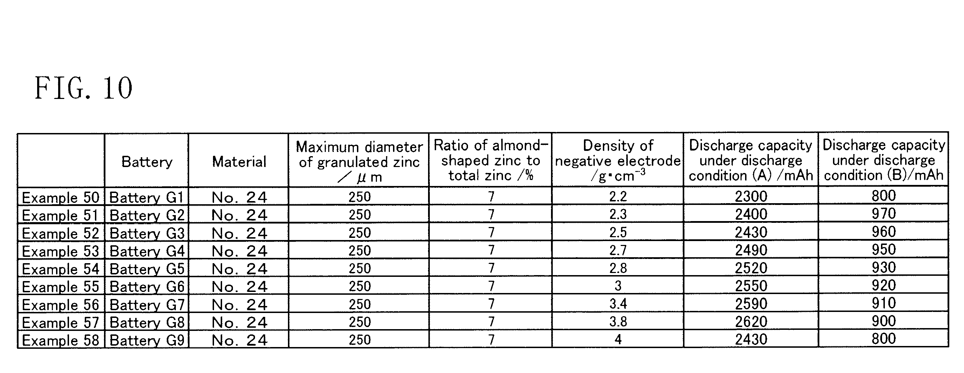

Dry batteries G1-G9 of Examples 50-58 shown in FIG. 10 were manufactured in the same manner as Example 1 except that almond-shaped zinc particles of No. 24 shown in FIG. 3 were used as the negative electrode active materials, the potato-shaped zinc granules of No. 1 (granulated zinc, a maximum diameter was 0.25 mm or lower) were added as the negative electrode active material, and the density of the negative electrode was varied by adjusting the filling amount of the negative electrode. The content of the almond-shaped zinc particles relative to the total negative electrode active material (zinc) was 7% by mass. FIG. 10 shows the results of evaluation of the dry batteries under the discharge conditions (A), (B).

Dry batteries G1 and G9 were improved in discharge characteristic as compared with the dry batteries of Comparative Examples 1-3, but the degree of improvement was low as compared with Dry batteries G2-G8. It is presumed that the action of forming the electron conductive network densely, and the action of diffusing the electrolyte were improved when the density of the negative electrode is 2.3 g/cm³ to 3.8 g/cm³, both inclusive.

### INDUSTRIAL APPLICABILITY

As described above, the mercury-free alkaline dry battery of the present invention is greatly improved in utilization ratio of the negative electrode, and is useful as batteries for devices which require long life batteries.

### DESCRIPTION OF REFERENCE CHARACTERS

- 21: Almond-shaped zinc particle
- 22: End (acute angle)
- 24: End (obtuse angle)

## Claims

1. A mercury-free alkaline dry battery comprising:
a positive electrode; a negative electrode; and a separator, wherein
the negative electrode contains almond-shaped zinc particles as a negative electrode active material, and
each of the almond-shaped zinc particles has a length in a long axis direction of 0.5 mm to 50 mm, both inclusive, and one of ends of the almond-shaped zinc particle in the long axis direction constitutes an acute end.

2. The mercury-free alkaline dry battery of claim 1, wherein
the almond-shaped zinc particle has a specific surface area of 160 cm²/g to 1500 cm²/g, both inclusive.

3. The mercury-free alkaline dry battery of claim 1 or 2, wherein
the almond-shaped zinc particle has a grain size of 1 µm to 50 µm, both inclusive.

4. The mercury-free alkaline dry battery of any one of claims 1 to 3, wherein
a relation of 0.1 ≤ minor radius/major radius ≤ 1 is established on a cross section of the almond-shaped zinc particle perpendicular to the long axis.

5. The mercury-free alkaline dry battery of any one of claims 1 to 4, wherein
the negative electrode contains a gelled alkaline electrolyte as a dispersion medium.

6. The mercury-free alkaline dry battery of any one of claims 1 to 5, wherein
the negative electrode further contains fine zinc particles having a maximum diameter of 500 µm or smaller as the negative electrode active material, and the content of the almond-shaped zinc particles is 2% by mass to 80% by mass, both inclusive, relative to the total negative electrode active material.

7. The mercury-free alkaline dry battery of claim 6, wherein
a relation of 3/20 ≤ minor radius/major radius ≤ 1 is established on a cross section of the almond-shaped zinc particle perpendicular to the long axis, and the maximum diameter of the fine zinc particles is 250 µm or smaller.

8. The mercury-free alkaline dry battery of any one of claims 1-7, wherein
the negative electrode has a density of 2.3 g/cm³ to 3.8 g/cm³, both inclusive.

9. The mercury-free alkaline dry battery of any one of claims 1-8, wherein
at least one substance selected from the group consisting of Al, Bi, In, Ca, and Mg is added to the almond-shaped zinc particles.

10. The mercury-free alkaline dry battery of claim 6 or 7, wherein
at least one substance selected from the group consisting of Al, Bi, In, Ca, and Mg is added to the almond-shaped zinc particles and the fine zinc particles.
